# EUROPÄISCHE PATENTSCHRIFT

(11) **EP 2 006 007 B1**
(45) Veröffentlichungstag und Bekanntmachung des Hinweises auf die Patenterteilung: **29.08.2012**
(21) Anmeldenummer: 08008878.4
(22) Anmeldetag: 14.05.2008
(51) Int. Cl.: B01D 39/16

(54) **Luftfilter mit mehrschichtigem Aufbau**
Air filter with multi-layered structure
Filtre à air doté d'une structure multicouche

(30) Priorität: 11.06.2007 DE 102007027393
(43) Veröffentlichungstag der Anmeldung: 24.12.2008
(73) Patentinhaber: Sandler AG, 95126 Schwarzenbach/Saale (DE)
(72) Erfinder:

(56) Entgegenhaltungen:
- EP-A- 0 432 586
- EP-A- 0 558 091
- US-A1- 2002 139 744

## Beschreibung

Die vorliegende Erfindung betrifft ein plissierbares Luftfiltermaterial mit mehrschichtigem Aufbau, wobei die einzelnen Schichten jeweils aus Vliesstoffen gebildet werden. Gattungsgemäße Luftfiltermaterialien sind aus dem Stand der Technik in diversen Ausgestaltungen bekannt.

US 5820645 beschreibt ein Verbundvliesstoffmaterial für Filtermedien. Dieses besteht aus einem mit einem adhäsiv beschichteten Spinnvlies und einem kardierten Vlies. Das kardierte Vlies setzt sich aus einer Lage mit feinen Stapelfasern und einer Lage mit groben Stapelfasern zusammen. Nachteilig ist bei dieser Art, dass die adhäsive Schicht als Sperrschicht dient und leicht zum Verblocken neigt, d.h. dass bei noch nicht ausgereizter Staubspeicherung das Filter bereits verblockt.

EP 0432586 offenbart ein mehrschichtiges Filtermaterial aus Vliesstoffen. Ein mittels Filznadeln mechanisch verfestigter Tiefenfilter aus groben Filamenten und ein mittels Prägekalander vorverfestigter Feinfilter aus feinen Filamenten sind hierbei mit Hilfe einer Schlitzfolie mit adhäsiven Eigenschaften verbunden. Auch hier ist die Schlitzfolie negativ zu sehen, da das Material bereits vor Ende der Nutzung blockiert. In DE 19843000 ist ein Luftfilter mit einem Tiefenfiltermaterial dargestellt, welches aus einem Vliesstoff besteht, der unterschiedlich verdichtete Bereiche aufweist und dessen adhäsiv bzw. kohäsiv verbundene Fasern Verschlingungen haben, die durch Flüssigkeitsstrahleinwirkung erzielt worden sind. Das Material hat keine Sperrschicht mehr, jedoch ist hier die Abscheidung von feinsten Staubpartikeln aufgrund der eingebrachten Stichkanäle bei der Verfestigung nicht mehr gegeben.

Die EP 558091A1 beschreibt einen zweilagigen Aufbau aus kardierten Vliesstofflagen, wobei jede der einzelnen Lagen zum Erreichen von Stabilität vernadelt wird. Der Verbund der beiden Lagen findet ebenfalls mittels eines doppelten Vernadelungsganges statt. Nachteilig ist dabei, dass sich beim Verbinden der beiden Lagen mittels der Nadeltechnik auch in der Reinluftseite Nadellöcher ausbilden, welche die Filtereffizienz gegenüber kleinen Partikeln (<0,5 µm) nicht gewährleistet.

Aufgabe der vorliegenden Erfindung ist es daher, ein verbessertes Filtermaterial für die Luftfiltration bereitzustellen, das eine gegenüber dem Stand der Technik verbesserte Staubspeicherfähigkeit und Staubabscheidung aufweist.

Gelöst wird die Aufgabe durch die Merkmale des Anspruchs 1, vorteilhafte Ausgestaltungen sind in den Unteransprüchen 2 bis 10 genannt.

Mit den aus dem Stand der Technik bekannten Filtermaterialien aus synthetischen, thermoplastischen Fasern ist es möglich bei der Luftfiltration Abscheidegrade gemäß ISO 12103-1, Staubart "Arizona test dust coarse" von bis zu 99,50% zu erreichen. Für manche Anwendungsbereiche, speziell bei der Filtration von Luft, die Verbrennungskraftmaschinen zugeführt, ist dies nicht ausreichend. Hier werden Abscheidegrade größer 99,60 % bei gleichzeitig guter Staubspeicherfähigkeit gefordert.

Der Stand der Technik bietet Lösungen, die entweder gute Abscheidegrade oder gute Staubspeicherung haben - eine Kombination war bisher nicht möglich, da entweder Klebstoffe, welche die einzelnen Filterlagen miteinander verbinden, als Sperrschicht wirken oder bei klebstofffreier Verbindung die Abscheidung von feinsten Partikeln nicht ausreichend ist.

Das erfindungsgemäße Luftfiltermaterial (1) stellt nun die Balance zwischen diesen eigentlich konträr verlaufenden Eigenschaften her. Durch die Kombination zweier voluminöser kardierter Vliesstoffe, bei welchen Anströmseite und Abströmseite unterschiedliche Faserorientierungen und Faserstärken aufweisen, wird dies erreicht.

Erfindungsgemäße Luftfiltermaterialien (1) haben daher prinzipiell folgenden Aufbau:

Anströmseitige Grobschicht (2) : kardierter, mechanisch und thermisch verfestigter Vliesstoff aus synthetischen, thermoplastischen Stapelfasern in einem Feinheitsbereich von 4.0 bis 15 dtex **(g/10000m).**

Abströmseitige Feinschicht (3): kardierter, rein thermisch verfestigter Vliesstoff aus synthetischen, thermoplastischen Stapelfasern in einem Feinheitsbereich von 0.7 bis 2.5 dtex **(g/10000m).**

Thermisch verfestigt bedeutet, dass innerhalb einer Schicht sowohl Matrixfasern als auch Schmelzfasern vorhanden sind. Diese Schmelzfasern werden mittels Heißluft aktiviert und verkleben sich dann mit den die Matrix bildenden Fasern. Geeignete Fasern sowie die zugrunde liegenden Prinzipien der Vliesbildung und der thermischen Verfestigung können dem Buch "Vliesstoffe", erscheinen im Wiley VCH 2000, Seite 353 ff. entnommen werden.

Mechanisch verfestigt im Sinne der vorliegenden Erfindung bedeutet, dass der ursprünglich unverfestigte Faserflor einer Nadelbehandlung gemäß bekannten Technologien wie klassischer Vernadelung oder auch Wasserstrahlvernadelung (vergleiche hierzu Buch "Vliesstoffe", Seiten 270 ff., Wiley-VCH, 2000) unterzogen wurde. Die im Krempelprozess vorzugsweise rein in X- und Y-Richtung flächig verteilten Einzelfasern werden dadurch teilweise über die Dicke des Materials - in Z-Richtung- umorientiert. Die Fasern werden durch diese Vernadelung aus ihrer nach dem Krempelprozess zunächst parallelen X/Y-Verteilung in eine wirre Verteilung in alle drei Dimension gebracht.

Der Grad der Umorientierung hängt dabei von dem Durchmesser der zur Anwendung gekommenen Nadeln, der Eindringtiefe der Nadeln in das Vlies, der Anzahl Kerben, sogenannter "Barbs", auf der Nadeloberfläche und der Anzahl Einstiche pro Quadratzentimeter Vliesoberfläche ab.

Erfindungsgemäß entstehen durch diese Nadelung auf der Anströmseite der Grobschicht (2) die Einstichkanäle (5).

Diese Einstichkanäle (5) wirken sich innerhalb der Grobschicht (2) zum einen günstig auf die Speicherung grober Staubpartikel aus, zum anderen bewirken diese, da sie je nach Ausprägung der Nadelung maximal über die ganze Dicke der Grobschicht (2) verlaufen, eine Bypass-Wirkung für anströmende Luft.

Dies bedeutet, das anströmende Luft bei dem erfindungsgemäßen Filtermaterial einen Großteil der Dicke der Grobschicht (2) ohne nennenswerten Luftwiderstand überwinden kann. Dadurch bleibt die Luftdurchlässigkeit auch bei hoher Staubbeladung über einen langen Zeitraum nahezu gleich.

Abhängig vom späteren Einsatzzweck des erfindungsgemäßen Filtermaterials ist daher die Parameter für Vernadelung zur Erzeugung der Einstichkanäle (5) der Grobschicht (2) zu wählen.

Wird ein erfindungsgemäßes Luftfiltermaterial (1) in einer Umgebung eingesetzt, welche eine hohe Grobstaubbelastung aufweist, beispielsweise in der Zuluftfiltration von Baumaschinen, hat es sich als günstig erwiesen, Nadeln zu wählen, die eine hohe Umorientierungswirkung gewährleisten. Dazu werden erfindungsgemäß 3-Barb-Nadeln mit einem Nadeldurchmesser von 2 mm eingesetzt. Die Anzahl Einstiche liegt bei ca. 30/**cm²**. Die Grobschicht (2) wird vollständig durchdrungen. Die Luftdurchlässigkeit (gemäß DIN 53887, geprüft bei 100Pa Differenzdruck) liegt für diesen Einsatzzweck im Bereich von 600 bis 900l/**m^{2*}**sec.

Arbeitet man mit dem erfindungsgemäßen Luftfilter in einer Umgebung, die einen hohen Anteil an Feinstaub aufweist, hat es sich als günstig erwiesen, 1-Barb Nadeln mit einem Durchmesser von 1 mm bei einer Anzahl von 50 Einstichen/cm² einzusetzen. Die Luftdurchlässigkeit (gemäß DIN 53887, geprüft bei 100Pa Differenzdruck) liegt für diesen Einsatzzweck im Bereich von 400 bis 700l/**m^{2*}**sec.

Es wurde festgestellt, dass sich die Vernadelung nicht nur positiv auf die Staubspeicherfähigkeit auswirkt sondern auch in entscheidendem Maße für die Eigensteife des erfindungsgemäßen Materials verantwortlich ist.

Der Grobschicht (2) folgt die Feinschicht (3). Sie bildet eine Sperrschicht gegenüber feinen Partikeln und sichert damit die Güte der ausströmenden Luft. Die Feinschicht (3) ist rein aus kardierten Stapelfasern gebildet, wobei den feintitrigen Matrixfasern, bevorzugter Titerbereich 0.9 dtex **(g/10000m)**, ein Anteil von bis 70% Schmelzfasern in einem Titerbereich von 1.7 bis 2.2dtex **(g/10000m)** zugemischt ist.

Die Faserorientierung innerhalb der Feinschicht (3) ist nur in X- und Y-Richtung gegeben, unterscheidet sich dadurch wesentlich von der der Grobschicht (2). Sie fungiert daher als Sperrschicht vor allem gegenüber feinen Staubpartikeln im Größenbereich kleiner 2µm.

Der Verbund der Grobschicht (2) mit der Feinschicht (3) wird, durch in den jeweiligen Vliesstoffen vorhandenen Schmelzfasern erreicht, diese werden durch Hitze aktiviert und verbinden dadurch unter Druckeinwirkung die beiden, die Anström- und Abströmseite bildenden Schichten (2) und (3).

Das Flächengewicht der Grobschicht (2) und der Feinschicht (3) ist in Abhängigkeit vom jeweiligen Einsatzzweck zu ermitteln. Die Bestimmung geschieht dabei gemäß EDANA 40.3-90.

Die Dicke des Gesamtaufbaus (gemessen gemäß EDANA 30.5-99 bei 0.02kPa Vorlast) liegt zwischen 2 und 8 mm, wobei die Grobschicht (2) und die Feinschicht (3) unterschiedliche Dicken haben können. Die Dicke der Feinschicht (3) sollte aber nicht weniger als 20% der Dicke der Grobschicht (2) aufweisen, da ansonsten keine ausreichende Luftdurchlässigkeit mehr gegeben ist. Liegt die Dicke der Feinschicht (3) über 40% der Dicke der Grobschicht (2) ist die Abscheidung gegenüber Feinstäuben mit Partikelgrößen kleiner 2 µm nicht mehr ausreichend.

Prinzipiell haben sich für Bereiche mit hohem Grobstaubanteil (Hauptpartikelgrößen größer 5µm) erfindungsgemäße Luftfilter (1) als geeignet erwiesen, die ein höheres Flächengewicht der Grobschicht (2) im Vergleich zur Feinschicht (3) aufweisen. Vorzugsweise werden in diesem Bereich Flächengewichte der Grobschicht (2) von 100 bis 400 g/**m²** und Flächengewichte der Feinschicht (3) von 100 bis 300 g/**m²** eingesetzt. Die Dicke des Luftfilters (1) liegt hier im Bereich von 6 bis 8mm.

Kommt das erfindungsgemäße Luftfilter (1) in Bereichen mit höherem Feinstaubanteil (Hauptpartikelgrößen kleiner 2µm) zum Einsatz, sollte das Flächengewicht von Grobschicht (2) und Feinschicht (3) nahezu gleich sein. Vorzugsweise werden in diesem Einsatzbereich Flächengewichte von 100 bis 250 g/**m²** für diese beiden Schichten eingesetzt. Die Dicke des Luftfilters (1) liegt hier im Bereich von 3 bis 4mm.

Nachfolgend ein Vergleich des erfindungsgemäßen Luftfiltermaterials (1) zu einem dem Stand der Technik entsprechendem Vliesstoff.

Artikel 6388-380g/qm ist ein dem Stand der Technik entsprechender mehrschichtiger Nadelvliesstoff, dessen einzelne Lagen mittels der Nadeltechnologie miteinander verbunden sind. Dabei ist die Abströmseite zusammengesetzt aus 30% PET-Faser 0,9dtex**(g/10000m)** /38 mm und 70% CoPET/PET-Schmelzklebefaser 2,2dtex**(g/10000m)** /40 mm. Die Anströmseite besteht aus 50% PET-Fasern 6,7dtex**(g/10000m)** /60 mm und 50% CoPET/PET-Schmelzklebefaser 4.2dtex**(g/10000m)** /50 mm.

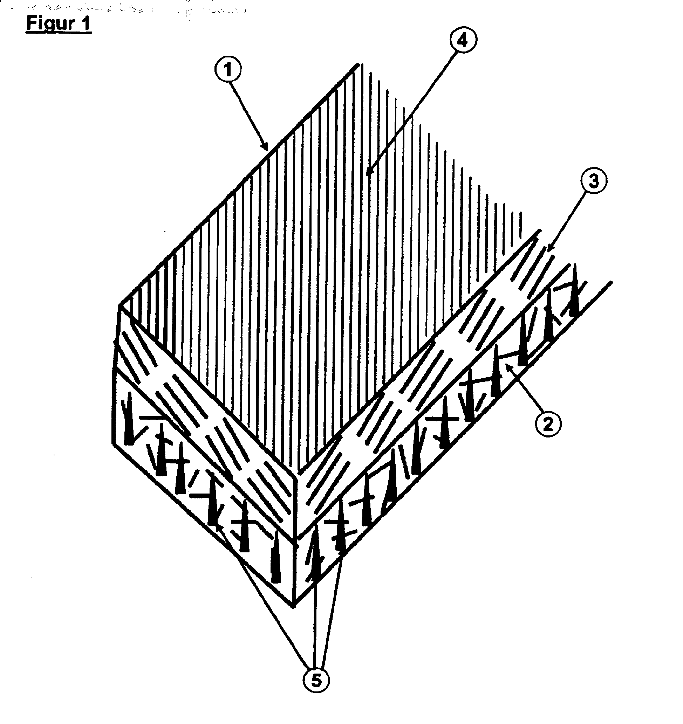

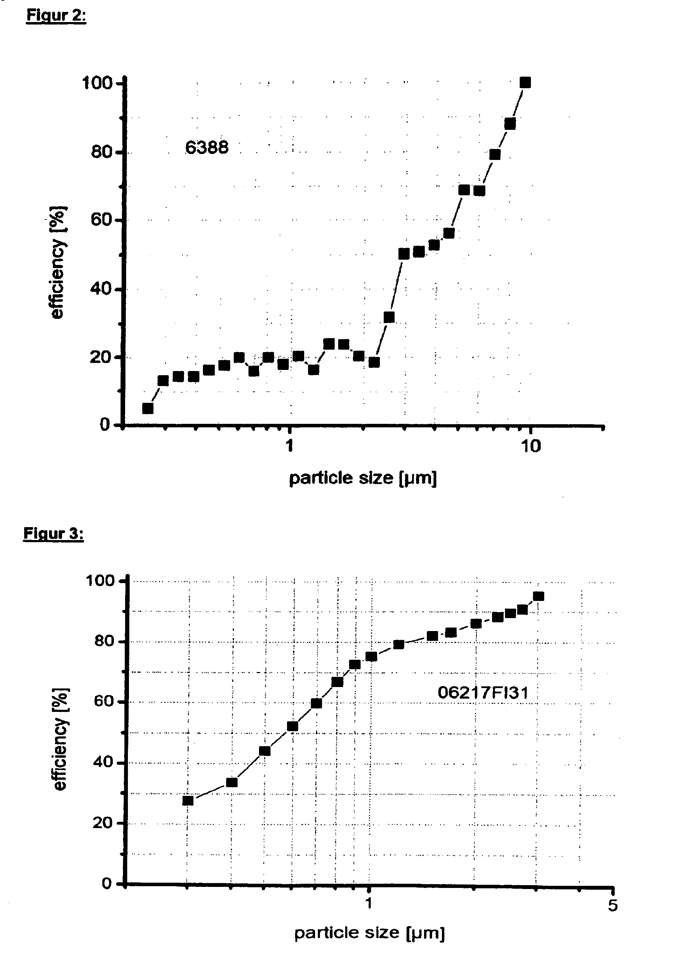

Das erfindungsgemäße Luftfiltermaterial (1) ist in Tabelle 1 und der Figur 3 als 016217FI31 bzw. mit geglätteter Abströmseite als 016227FI31 bezeichnet. Dabei wird die Grobschicht (2) aus einem Vliesstoff im Gewicht von 190 g/**m²**, einer Dicke von 4 mm und einer Zusammensetzung aus 50% CoPET / PET-Schmelzfaser 4.4dtex **(g/10000m)** und 60 mm Länge und 50% einer PET-Matrixfasern 6.7dtex**(g/10000m)** / 60 mm gebildet. Zur Erzeugung der erfindungsgemäß vorhandenen Einstichkanäle (5) wurden 3 Barb-Nadeln mit einer Einstichtiefe von 8mm und einer Nadeldichte von 50 Einstichen/**cm²** von verwendet.

Die Feinschicht (3) ist aus 30% PET Matrixfasern mit einem Titer von 0.9 dtex **(g/10000m)** / 50 mm, und 70% CoPET / PET-Schmelzfaser 2.2dtex**(g/10000m)** /60 mm gebildet. Sie weist ein Flächengewicht von 190 g/**m²** bei einer Dicke von 2 mm auf.

**Tabelle 1: Ermittlung der Staubspeicherfähigkeit und Abscheidegrad in Anlehnung an DIN 44956 - 2**

| Artikel | Staubspeicher-fähigkeit gemäß DIN 44956 - 2 in g/m² | Abscheidegrad in % |
|---|---|---|
| Stand der Technik (6388, 380g/**m²**) | 902 | 99,54 |
| Erfindungsgemäßes Luftfiltermaterial (1) (016217FI31, 380g/**m²**) | 899 | 99,72 |
| Erfindungsgemäßes Luftfiltermaterial (1), geglättete Abströmseite (016227FI31380 g/**m²**) | 887 | 99,75 |
| | | |
| Prüfungsparameter | Aufbau gemäß DIN 44956-2 dP=20mbar Probengröße 100 cm² Staub: Arizona coarse | |

Betrachtet man die Ergebnisse der Tabelle 1 sowie die Figuren 2 und 3 so kann man folgendes erkennen:

Im Unterschied zum Stand der Technik bringt die im erfindungsgemäßen Filtermaterial (1) vorhandene Kombination aus Faserorientierung X-Y-Z in der Grobschicht (2) und der X-Y-Orientierung in der Feinschicht (3) eine gleich bleibend gute Staubspeicherfähigkeit bei deutlich angehobener Abscheideleistung gegenüber Feinstäuben.

Betrachtet man die Figuren 2 und 3, so erkennt man, dass beim erfindungsgemäßen Luftfiltermaterial (1) die Staubscheidung im unteren Bereich der Partikelgrößen von kleiner 1 µm deutlich verbessert wurde.

Filtermaterialien nach dem Stand der Technik erreichen daher bei Partikelgrößen kleiner 5µm kaum über 20% Abscheidung.

Erfindungsgemäß hergestellte Luftfitermaterialien (1) haben eine wesentlich verbesserte Abscheidung, sodass wie man der Figur 3 entnehmen kann, bereits bei Partikelgrößen von 0,3µm bei 30% Abscheidung liegt. Dieser Quantensprung ist letztendlich auch für das Überschreiten der 99,6%-Grenze beim Abscheidegrad verantwortlich.

Als besondere Ausgestaltung des erfindungsgemäßen Filtermaterials (1) hat sich die thermische Glättung der Oberfläche der Feinschicht (3) auf der Abströmseite des Filtermaterials (1) erwiesen.

Durch die nur oberflächliche thermische Behandlung der außenliegenden Fasern mit Temperaturen oberhalb des Erweichungspunktes der CoPET/PET-Faser aber unterhalb des Schmelzpunktes der Matrixfasern wird eine Deformation der in diesem Bereich liegenden Co-PET/PET-Fasem erreicht.

Dies führt bei annähernd gleicher Staubspeicherung zu nochmals erhöhter Abscheidung, wie die Tabelle 1 zeigt. Andererseits sind die an der Oberfläche der Abströmseite sitzenden Co-PET/PET- Fasern besser an der Oberfläche gebunden und können daher nicht abflusen und zu Kontaminationen führen. Des Weiteren ist dadurch auch diese Filterseite mechanisch stabil wodurch man diese abreinigen kann.

## Patentansprüche

1. Luftfiltermaterial (1) aus synthetischen Stapelfasermaterialien mit mehrschichtigem Aufbau, umfassend eine anströmseitig angeordnete Grobschicht (2) aus Vliesstoff und eine abströmseitig angeordnete Feinschicht (3) aus Vliesstoff **dadurch gekennzeichnet**,
➢ dass die Grobschicht (2) und die Feinschicht (3) aus kardierten Vliesstoffen aus verfestigten thermoplastischen Polymerfasern bestehen,
➢ dass die Stapelfasern innerhalb der anströmseitig angeordneten Grobschicht (2) eine Orientierung in x- y- und z-Richtung aufweisen, wobei die Orientierung in die z-Richtung durch Vernadelung erreicht wird,
➢ dass die Stapelfasern innerhalb der abströmseitig angeordneten Feinschicht (3) eine Orientierung nur in x- und y-Richtung aufweisen, und
➢ dass die Grobschicht (2) und die Feinschicht (3) thermisch miteinander verbunden sind.

2. Luftfiltermaterial (1) nach Anspruch 1,
**dadurch gekennzeichnet, dass**
die Feinheit der thermoplastischen Polymerfasern der Feinschicht (3) mindestens 0,7 dtex (g/10000m) und höchstens 2,5 dtex (g/10000m) beträgt.

3. Luftfiltermaterial (1) nach einem der Ansprüche 1 und 2,
**dadurch gekennzeichnet, dass**
die Feinheit der thermoplastischen Polymerfasern der Grobschicht (2) mindestens 3,3 dtex (g/10000m) und höchstens 15,0 dtex (g/10000m) beträgt.

4. Luftfiltermaterial (1) nach einem der Ansprüche 1 bis 3,
**dadurch gekennzeichnet, dass**
die thermoplastischen Polymerfasern der Feinschicht (3) aus der Gruppe der Polyester ausgewählt sind.

5. Luftfiltermaterial (1) nach einem der Ansprüche 1 bis 4,
**dadurch gekennzeichnet, dass**
die thermoplastischen Polymerfasern der Grobschicht (2) aus der Gruppe der Polyester ausgewählt sind.

6. Luftfiltermaterial (1) nach einem der Ansprüche 1 bis 5,
**dadurch gekennzeichnet, dass**
die Feinschicht eine Oberflächenglättung (4) an der von der Grobschicht (2) abgewandten Oberfläche aufweist.

7. Luftfiltermaterial (1) nach einem der Ansprüche 1 bis 6,
**dadurch gekennzeichnet, dass**
das Flächengewicht des Luftfiltermaterials (1) mindestens 200 g**/m²** und höchstens 600 g/**m²** beträgt.

8. Luftfiltermaterial (1) nach einem der Ansprüche 1 bis 7,
**dadurch gekennzeichnet, dass**
der Flächengewichts-Anteil der Feinschicht (3) mindestens 30% und höchstens 70% vom Gesamt-Flächengewicht des Luftfiltermaterials (1) beträgt.

9. Luftfiltermaterial (1) nach einem der Ansprüche 1 bis 8,
**dadurch gekennzeichnet, dass**
die Dicke des Luftfiltermaterials (1) mindestens 2 mm und höchstens 8 mm beträgt.

10. Luftfiltermaterial (1) nach einem der Ansprüche 1 bis 9,
**dadurch gekennzeichnet, dass**
die Dicke der Feinschicht (3) mindestens 20% und höchstens 40% der Dicke der Grobschicht (2) beträgt.

## Claims

1. Air filter material (1) made of synthetic staple fibre materials with multiple layer structure, comprising a coarse layer (2) made of fleece material disposed on the upstream side and a fine layer (3) made of fleece material disposed on the downstream side
**characterised in that**
➢ the coarse layer (2) and the fine layer (3) consist of carded fleece material made of set thermoplastic polymer fibres,
➢ the staple fibres feature an orientation in x y- and z direction within the upstream side of coarse layer (2), whereby the orientation in the z-direction is attained by needling,
➢ the staple fibres feature an orientation only in x and y direction within the fine layer (3) disposed on the downstream side, and
➢ the coarse layer (2) and the fine layer (3) are thermally bonded together.

2. Air filter material (1) according to claim 1
**characterised in that**
the fineness of the thermoplastic polymer fibres of the fine layer (3) is at least 0.7 dtex (g/10000m) and at most 2.5 dtex (g/10000m).

3. Air filter material (1) according to one of claims 1 and 2
**characterised in that**
the fineness of the thermoplastic polymer fibres of the coarse layer (2) is at least 3.3 dtex (g/10000m) and at most 15.0 dtex (g/10000m).

4. Air filter material (1) according to one of claims 1 to 3
**characterised in that**
the thermoplastic polymer fibres of the fine layer (3) are selected from the group of polyesters.

5. Air filter material (1) according to one of claims 1 to 4
**characterised in that**
the thermoplastic polymer fibres of the coarse layer (2) are selected from the group of polyesters.

6. Air filter material (1) according to one of claims 1 to 5
**characterised in that**
the fine layer features a surface smoothing (4) on the surface oriented away from the coarse layer (2).

7. Air filter material (1) according to one of claims 1 to 6
**characterised in that**
the basis weight of the air filter material (1) is at least 200 g/m² and at most 600 g/m²_{.}

8. Air filter material (1) according to one of claims 1 to 7
**characterised in that**
the basis weight share of the fine layer (3) is at least 30% and at most 70% of the entire basis weight of the air filter material (1).

9. Air filter material (1) according to one of claims 1 to 8
**characterised in that**
the thickness of the air filter material (1) is at least 2 mm and at most 8 mm.

10. Air filter material (1) according to one of claims 1 to 9
**characterised in that**
the thickness of the fine layer (3) is at least 20% and at most 40% of the entire thickness of the coarse layer (2).

## Revendications

1. Matériau (1) de filtre à air composé de fibres synthétiques discontinues structurées multicouches comprenant une couche grossière (2) en non-tissé agencée du côté du flux entrant, et une couche fine (3) en non-tissé agencée du côté du flux sortant,
**caractérisé en ce que**
➢ la couche grossière (2) et la couche fine (3) se composent de non-tissés cardés en fibres polymères thermoplastiques enchevêtrées,
➢ les fibres discontinues présentent une orientation dans le sens x, y et z à l'intérieur de la couche grossière (2) agencée du côté du flux entrant, sachant que l'orientation dans le sens z est obtenue par aiguilletage,
➢ les fibres discontinues présentent une orientation seulement dans le sens x et y dans la couche fine (3) agencée du côté du flux sortant, et que
➢ la couche grossière (2) et la couche (3) ont été reliées thermiquement entre elles.

2. Matériau (1) de filtre à air selon la revendication 1,
**caractérisé en ce que**
la finesse des fibres polymères thermoplastiques composant la couche fine (3) est d'au minimum 0,7 dtex (g/10000m) et d'au maximum 2,5 dtex (g/10000m).

3. Matériau (1) de filtre à air selon l'une des revendications 1 et 2,
**caractérisé en ce que**
la finesse des fibres polymères thermoplastiques composant la couche grossière (2) est d'au minimum 3,3 dtex (g/10000m) et d'au maximum 15,0 dtex (g/10000m).

4. Matériau (1) de filtre à air selon l'une des revendications 1 à 3,
**caractérisé en ce que**
les fibres polymères thermoplastiques composant la couche fine (3) ont été sélectionnées dans le groupe des polyesters.

5. Matériau (1) de filtre à air selon l'une des revendications 1 à 4,
**caractérisé en ce que**
les fibres polymères thermoplastiques de la couche grossière (2) ont été sélectionnées dans le groupe des polyesters.

6. Matériau (1) de filtre à air selon l'une des revendications 1 à 5,
**caractérisé en ce que**
la couche fine présente un lissage superficiel (4) à la surface située du côté opposé à la couche grossière (2).

7. Matériau (1) de filtre à air selon l'une des revendications 1 à 6,
**caractérisé en ce que**
le grammage du matériau de filtre à air (1) est d'au minimum 200 g/m² et d'au maximum 600 g/m².

8. Matériau (1) de filtre à air selon l'une des revendications 1 à 7,
**caractérisé en ce que**
le grammage de la couche fine (3) représente au minimum 30 % et au maximum 70 % du grammage total du matériau (1) du filtre à air.

9. Matériau (1) de filtre à air selon l'une des revendications 1 à 8,
**caractérisé en ce que**
l'épaisseur du matériau (1) de filtre à air est comprise entre au minimum 2 mm et au maximum 8 mm.

10. Matériau (1) de filtre à air selon l'une des revendications 1 à 9,
**caractérisé en ce que**
l'épaisseur de la couche fine (3) représente au minimum 20 % et au maximum 40 % de l'épaisseur de la couche grossière (2).
